# EUROPÄISCHE PATENTSCHRIFT

(11) **EP 2 516 191 B1**
(45) Veröffentlichungstag und Bekanntmachung des Hinweises auf die Patenterteilung: **06.11.2013**
(21) Anmeldenummer: 10787431.5
(22) Anmeldetag: 03.12.2010
(51) Int. Cl.: B60K 1/02, B60K 7/00, B60K 28/16, B60K 6/365, B60K 6/445

(54) **SYSTEM ZUR VARIABLEN MOMENTENVERTEILUNG**
SYSTEM FOR VARIABLE TORQUE DISTRIBUTION
SYSTÈME DE RÉPARTITION VARIABLE DU COUPLE

(30) Priorität: 21.12.2009 DE 102009059903
(43) Veröffentlichungstag der Anmeldung: 31.10.2012
(73) Patentinhaber: Schaeffler Technologies AG & Co. KG, 91074 Herzogenaurach (DE)
(72) Erfinder: SMETANA, Tomas, 91074 Herzogenaurach (DE)
(86) Internationale Anmeldenummer: PCT/EP2010/068857
(87) Internationale Veröffentlichungsnummer: WO 2011/076542

(56) Entgegenhaltungen:
- WO-A2-2006/108977
- DE-A1-102005 025 617
- US-A1- 2004 048 710
- US-A1- 2007 256 869
- US-A1- 2009 197 727

## Beschreibung

### Gebiet der Erfindung

Die gegenwärtige Erfindung betrifft ein System zur variablen Momentenverteilung innerhalb mindestens einer Achse eines Kraftfahrzeuges. Im Besonderen umfasst das System einen Hauptantrieb und einen Torque Vectoring Motor.

Die deutsche Offenlegungsschrift DE 10 2006 028 790 A1 offenbart eine Einrichtung zum Verteilen eines Antriebsmomentes auf wenigstens zwei Antriebswellen einer Fahrzeugachse. Ebenso wird ein Achsgetriebe vorgeschlagen, dass ein Differenzial umfasst, welches zwei Elektromotoren besitzt, die jeweils einer Abtriebswelle zugeordnet sind. Die jeweilige Abtriebswelle ist mit einem Element des Differenzials verbunden. Der Differenzialkorb des Differenzials wird von einem Antrieb angetrieben. Der Differenzialkorb besitzt ein inneres Ausgleichsräderpaar und ein äußeres Ausgleichsräderpaar, wobei jeweils zwei Ausgleichsräder der Ausgleichsräderpaare auf einer gemeinsamen Achse angeordnet sind. Der Abtrieb jeder Seite der Achse ist mit dem inneren Ausgleichsräderpaar verbunden, wobei jeder Elektromotor über eine Hohlwelle mit einem Ausgleichsrad des äußeren Ausgleichsräderpaares des Differenzials verbunden ist.

Die deutsche Offenlegungsschrift DE 103 19 684 A1 offenbart ein Getriebe zum Verteilen eines Antriebsmomentes auf wenigstens zwei Abtriebswellen mit mindestens zwei wenigstens dreiwelligen Planetensätzen. Jeweils eine Welle eines Planetensatzes ist mit einer Antriebswelle verbunden. Des Weiteren stellt jeweils eine Welle eines Planetensatzes eine der Antriebswellen dar und jeweils wenigstens eine weitere Welle eines Planetensatzes ist mit einer Welle eines weiteren Planetensatzes wirkverbunden. Ein betriebszustandsabhängiges Moment einer Welle ist in Abhängigkeit eines Betriebszustandes der jeweils anderen damit wirkverbundenen Welle über die Wirkverbindung derart abstützbar, dass beim Auftreten eines Drehzahlunterschiedes zwischen den Antriebswellen über die Wirkverbindung ein den Drehzahlunterschied veränderndes Moment an den Planetensätzen anliegt.

Die Veröffentlichungen DE 11 2006 002 537 T5, DE 11 2006 002 068 T5, DE 11 2006 000 751 T5, DE 11 2006 000 401 T5, DE 11, 2006 002 557 T5, DE 11 2006 002 031 T5, DE 11 2006 002 210 T5 und DE 11 2006 002 069 T5 offenbaren verschiedene Ausführungsformen eines elektrisch verstellbaren Getriebes. In einer Ausführungsform besteht das elektrisch verstellbare Getriebe aus einem Antriebselement zur Aufnahme der Leistung einer Maschine. Das elektrisch verstellbare Getriebe umfasst einen ersten und einen zweiten Differenzialzahnradsatz, die jeweils ein erstes, ein zweites und ein drittes Element aufweisen. Das Antriebselement ist nicht ständig mit irgendeinem Element der Zahnradsätze verbunden. Ein erstes Verbindungselement, das das erste Element des ersten Zahnradsatzes ständig mit dem ersten Element des zweiten Zahnradsatzes verbindet, ist vorgesehen. Ebenso ist ein zweites Verbindungselement vorgesehen, dass das zweite Element des zweiten Zahnradsatzes ständig mit dem zweiten Element des ersten Zahnradsatzes oder mit einem feststehenden Element verbindet.

Der erste Motor oder Generator ist ständig mit einem Element des ersten oder zweiten Zahnradsatzes verbunden. Der zweite Motor/Generator ist selektiv mit zweien der Elemente des ersten oder zweiten Zahnradsatzes verbunden. Ebenso ist eine zweite Drehmomentübertragungseinrichtung vorgesehen, die ein Element des ersten oder zweiten Zahnradsatzes selektiv mit dem Antriebselement verbindet, wobei dieses Element von dem einen verschieden ist, das durch die erste Drehmomentübertragungseinrichtung verbunden ist. Ferner ist eine dritte Drehmomentübertragungseinrichtung vorgesehen, die ein Element des zweiten Zahnradsatzes selektiv mit einem Element des ersten Zahnradsatzes mit einem feststehenden Element oder mit dem Antriebselement verbindet. Eine vierte Drehmomentübertragungseinrichtung ist parallel zu einem ersten und zweiten Motor/Generator geschaltet, um deren Rotation selektiv zu verhindern. Eine fünfte Drehmomentübertragungseinrichtung ist parallel zu den anderen der Motoren/Generatoren geschaltet, um deren selektive Rotation zu verhindern. Erste, zweite, dritte, vierte und fünfte Drehmomentübertragungseinrichtung sind einrichtbar ausgestaltet, um ein elektrisch verstellbares Getriebe mit einem stufenlos verstellbaren Bereich von Drehzahlverhältnissen und vier festen Vorwärtsdrehzahlverhältnissen bereitzustellen. WO 2006108977 A2 zeigt ein System gemäß den Oberbegriff des Anspruchs 1. Aufgabe der gegenwärtigen Erfindung ist es, ein System zur variablen Momentenverteilung innerhalb mindestens einer Achse eines Kraftfahrzeuges zu schaffen, das einen modularen Aufbau besitzt und eine hohe Leistungsdichte aufweist.

Die Aufgabe wird durch ein System zur variablen Momentenverteilung gelöst, das die Merkmale im Anspruch 1 umfasst.

Ein System zur variablen Momentenverteilung innerhalb mindestens einer Achse, wie es gemäß der Erfindung für ein Kraftfahrzeug verwendet wird, verfügt über einen Hauptantrieb und einen Torque Vectoring Motor. Bei einer Ausführungsform der Erfindung kann der Hauptantrieb als ein Verbrennungsmotor ausgebildet sein. Vorzugsweise ist bei einer anderen Ausführungsform der Erfindung der Hauptantrieb als ein Elektromotor ausgebildet.

Zunächst leitet der Hauptantrieb, der außeraxial in Bezug auf die Achse eines Kraftfahrzeuges angeordnet ist, sein Drehmoment auf ein auf der Achse angeordnetes Differenzial über mindestens eine vorgeschaltete Getriebestufe ein. Eine vorteilhafte Bauform der erfindungsgemäßen Anordnung kann vorsehen, dass das Differenzial als ein Stirnraddifferenzial gebildet ist.

Die Vorteile der Erfindung treten durch die außeraxiale Anordnung des Hauptantriebs in Bezug auf die Achse besonders stark hervor. Durch diese Anordnung wird der axiale Bauraum reduziert, was eine Vergrößerung des Differenzials ermöglicht. Wie bereits oben beschrieben, kann der Hauptantrieb wahlweise ein Elektro- oder Verbrennungsmotor sein. Für den Fall, dass der Hauptantrieb mit einem Verbrennungsmotor versehen ist, wird das Fahrzeug als ein Hybridfahrzeug bezeichnet. Ist der Hauptantrieb mit einem Elektromotor versehen, ist das Fahrzeug in diesem Fall ein reines Elektrofahrzeug. Es sei an dieser Stelle erwähnt, dass gerade für Kraftfahrzeughersteller sportlicher Elektrofahrzeugausführungen die außeraxiale Anordnung eines Elektromotors eine Vergrößerung des Elektrodifferenzials ermöglicht, woraus sich demzufolge neue Nennleistungen beziehungsweise Spitzenleistungen des Hauptantriebs entwickeln lassen.

Erfindungsgemäß wird vorgeschlagen, dass der Hauptantrieb derart angeordnet ist, dass dessen Hauptantriebswelle entweder senkrecht oder parallel in Bezug auf die Achse verläuft, wobei die vorgeschaltete Getriebestufe bei einer senkrechten Anordnung der Hauptantriebswelle als ein Hypoidgetriebe und bei waagerechter Anordnung der Hauptantriebswelle als ein mindestens einstufiges Stirnradgetriebe ausgebildet ist.

Hypoidgetriebe sind in vielfältiger Form und Ausführung auf dem Markt bekannt und gebräuchlich. Sie dienen insbesondere zur Drehmomentumlenkung um beispielsweise 90° und können im Vergleich zu Kegelradstufen höhere Momente übertragen. Vorzugsweise verläuft die Hauptantriebswelle aber parallel in Bezug auf die Achse, da das beispielsweise einstufige oder zweistufige Stirnradgetriebe ein besseres Verhältnis aus der Abtriebs- und Antriebsleistung schafft als ein Hypoidgetriebe mit relativ schlechtem Wirkungsgrad bei senkrechter Anordnung der Hauptantriebswelle in Bezug auf die Achse des Kraftfahrzeugs.

Für den Fall, dass die vorgeschaltete Getriebestufe ein zweistufiges Stirnradgetriebe ist, wird das zweistufige Stirnradgetriebe durch eine Synchronisationseinrichtung gekoppelt. Dadurch wird eine permanente Synchronisation zwischen dem zweistufigen Stirnradgetriebe erreicht. Grundsätzlich ist mit der verwendeten Bezeichnung "Synchronisationseinrichtung" jede Art von Bauteil zur permanenten Synchronisation zwischen dem zweistufigen Stirnradgetriebe umfasst.

Wie bereits oben beschrieben, weist das System zur variablen Momentenverteilung innerhalb mindestens einer Achse eines Kraftfahrzeuges neben einem Hauptantrieb einen Torque Vectoring Motor auf, wobei der Torque Vectoring Motor auf eine Vorlegestufe wirkt, so dass radindividuell die Drehmomente innerhalb der Achse verteilbar sind., Diese Funktion kann unter anderem in Abhängigkeit der Fahrsituation dazu eingesetzt werden, fahrstabilisierende Giermomente um die Hochachse des Fahrzeuges zu erzeugen. Dies kann im Beschleunigungsfall als auch bei Bremsmanövern beziehungsweise im Rekuparationsfall geschehen. Rekuparation wäre bei entsprechender Programmierung der Steuerung des Fahrzeuges auch bei Kurvenfahrt ohne übersteuernde beziehungsweise untersteuernde Beeinflussung des Fahrverhalts möglich. Die Vorlegestufe ist dabei so konzipiert, dass der der Vorlegestufe zugeordnete Torque Vectoring Motor bei freier Differenzialfunktion für die Momentenverteilung am Differenzial sorgt. Der Torque Vectoring ist dabei derart konzipiert, dass er stillsteht, wenn an den Rädern einer Achse das gleiche Drehmoment anliegt. Falls dieser Motor aktiviert wird, ergibt sich über die Vorlegestufe, die aus zwei gleichdimensionierten parallelgeschalteten leistungsverzweigenden Planetengetrieben besteht, eine konkrete Drehzahl der Ausgleichräder in dem System, wobei den leistungsverzweigenden Planetengetrieben eine lastausgleichende Getriebestufe als aktive Stufe in Form eines Planetengetriebes nachgeschaltet ist. Dies bewirkt eine konkrete Differenzdrehzahl an den Rädern der jeweiligen Antriebsachse unabhängig vom Kurvenradius und der Geschwindigkeit des Kraftfahrzeuges.

Im Folgenden soll die Erfindung und ihre Vorteile anhand der beigefügten Figu ren erläutert werden. Dabei zeigen:
- Figur 1: eine erste schematische Anordnungsmöglichkeit des erfindungsgemäßen Systems zur variablen Momentenverteilung innerhalb mindestens einer Achse eines Kraftfahrzeuges;
- Figur 2: eine zweite schematische Anordnungsmöglichkeit des erfindungsgemäßen Systems zur variablen Momentenverteilung innerhalb minde-stens einer Achse eines Kraftfahrzeuges; und
- Figur 3: eine weitere schematische Anordnungsmöglichkeit des erfindungsgemäßen Systems zur variablen Momentenverteilung innerhalb mindestens einer Achse eines Kraftfahrzeuges.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße System zur variablen Momentenverteilung ausgestaltet sein kann und stellen keine abschließende Begrenzung der Erfindung dar.

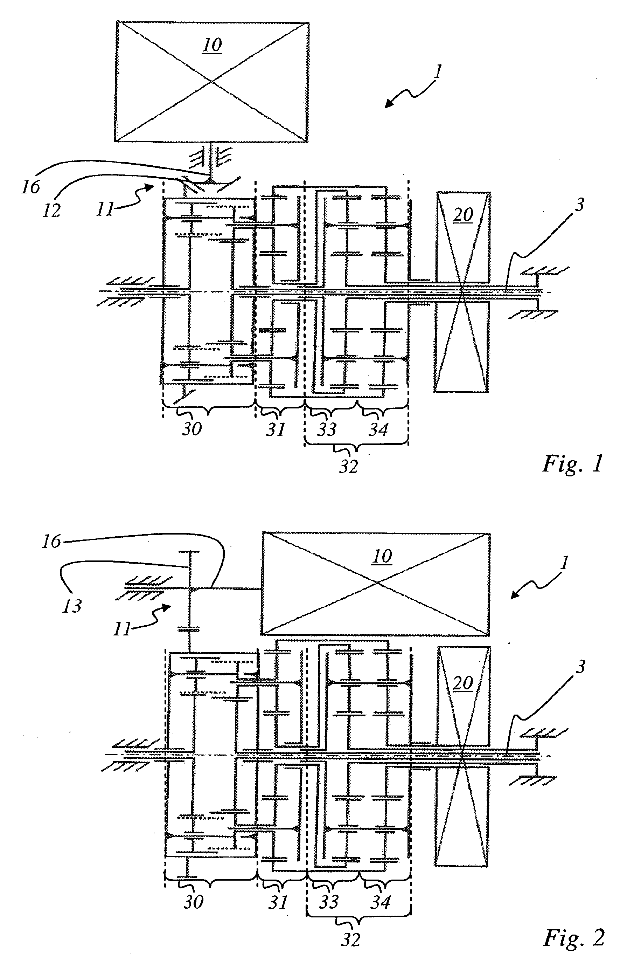

**Figur 1** zeigt eine erste schematische Anordnungsmöglichkeit des erfindungsgemäßen Systems 1 zur variablen Momentenverteilung innerhalb mindestens einer Achse 3 eines Kraftfahrzeuges (nicht dargestellt). In der gezeigten Ausprägung umfasst das System 1 einen Hauptantrieb 10, dessen Hauptantriebswelle 16 senkrecht in Bezug auf die Achse 3 verläuft und dessen Drehmoment auf ein auf der Achse 3 angeordnetes Differenzial 30 über eine vorgeschaltete Getriebestufe 11 in Form eines Hypoidgetriebes 12 eingeleitet wird. Das in Figur 1 dargestellte Hypoidgetriebe 12 stellt lediglich eine mögliche Ausführungsform eines Getriebes dar. Es ist für den Fachmann selbstverständlich, dass bei der Erfindung auch andere Getriebetypen einsetzbar sind. Über das Differenzial 30 werden die entsprechenden Drehmomente auf die Achse 3 übertragen. Ferner ist ein Torque Vectoring Motor 20 vorgesehen, der auf eine Vorlegestufe 32 wirkt, so dass radindividuell die Drehmomente innerhalb der Achse 3 verteilbar sind. Die Vorlegestufe 32 besteht aus zwei gleichdimensionierten parallelgeschalteten leistungsverzweigenden Planetengetrieben 33, 34, wobei die radindividuelle Verteilung der Drehmomente stufenlos über das Drehmoment des Torque Vectoring Motors 20 einstellbar ist. Den leistungsverzweigenden Planetengetrieben 33, 34 ist eine lastausgleichende Getriebestufe 31 als aktive Stufe in Form eines Planetengetriebes nachgeschaltet, um den durch die Planetengetriebe 33, 34 geteilten Drehmomentenfluss zum Abtrieb zusammenzuführen.

**Figur 2** zeigt eine zweite schematische Anordnungsmöglichkeit des erfindungsgemäßen Systems 1 zur variablen Momentenverteilung innerhalb mindestens einer Achse 3 eines Kraftfahrzeuges (nicht dargestellt). Hier umfasst das System 1 einen Hauptantrieb 10, dessen Hauptantriebswelle 16 parallel in Bezug auf die Achse 3 verläuft und dessen Drehmoment auf ein auf der Achse 3 angeordnetes Differenzial 30 über eine vorgeschaltete Getriebestufe 11 in Form eines einstufigen Stirnradgetriebes 13 eingeleitet wird. Das in Figur 2 dargestellte einstufige Stirnradgetriebe 13 stellt lediglich eine mögliche Ausführungsform eines Getriebes dar. Es ist für den Fachmann selbstverständlich, dass bei der Erfindung auch andere Getriebetypen einsetzbar sind. Wie bereits in Figur 1 beschrieben, werden über das Differenzial 30 die entsprechenden Drehmomente auf die Achse 3 übertragen. Ferner ist auch ein Torque Vectoring Motor 20 vorgesehen, der auf eine Vorlegestufe 32 wirkt, so dass radindividuell die Drehmomente innerhalb der Achse 3 verteilbar sind. Die Vorlegestufe 32 besteht aus zwei gleichdimensionierten parallelgeschalteten leistungsverzweigenden Planetengetrieben 33, 34, wobei die radindividuelle Verteilung der Drehmomente stufenlos über das Drehmoment des Torque Vectoring Motors 20 einstellbar ist. Den leistungsverzweigenden Planetengetrieben 33, 34 ist eine lastausgleichende Getriebestufe 31 als aktive Stufe in Form eines Planetengetriebes nachgeschaltet, um den durch die Planetengetriebe 33, 34 geteilten Drehmomentenfluss zum Abtrieb zusammenzuführen.

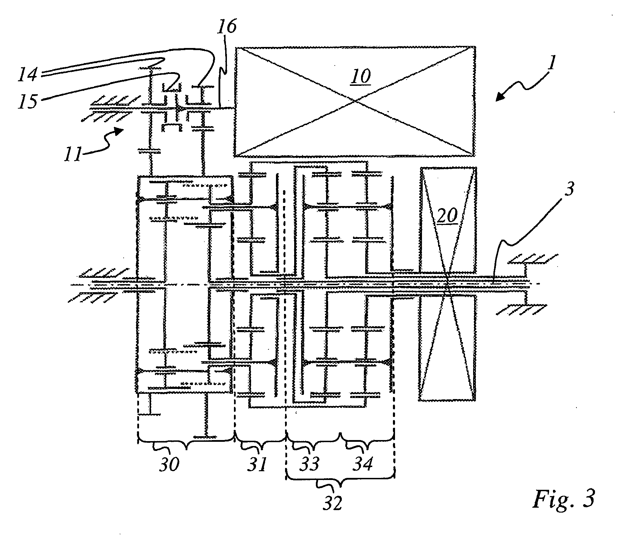

**Figur 3** zeigt eine weitere schematische Anordnungsmöglichkeit des erfindungsgemäßen Systems 1 zur variablen Momentenverteilung innerhalb mindestens einer Achse 3 eines Kraftfahrzeuges (nicht dargestellt). In der gezeigten Ausprägung umfasst das System 1 einen Hauptantrieb 10, dessen Hauptantriebswelle 16 parallel in Bezug auf die Achse 3 verläuft und dessen Drehmoment auf ein auf der Achse 3 angeordnetes Differenzial 30 über zwei vorgeschaltete Getriebestufen 11 in Form eines zweistufigen Stirnradgetriebes 14 eingeleitet wird. Dabei ist das zweistufige Stirnradgetriebe 15 durch eine Synchronisationseinrichtung 15 gekoppelt, so dass eine permanente Synchronisation zwischen den zweistufigen Stirnradgetriebe 14 erreicht wird. Das in Figur 3 darge-stellte zweistufige Stirnradgetriebe 14 stellt auch hier lediglich eine mögliche Ausführungsform eines Getriebes dar. Es ist für den Fachmann selbstverständlich, dass bei der Erfindung auch andere Getriebetypen einsetzbar sind. Wie bereits in Figur 1 und 2 beschrieben, werden über das Differenzial 30 die entsprechenden Drehmomente auf die Achse 3 übertragen. Auch hier ist ein Torque Vectoring Motor 20 vorgesehen, der auf eine Vorlegestufe 32 wirkt, so dass radindividuell die Drehmomente innerhalb der Achse 3 verteilbar sind. Die Vorlegestufe 32 besteht aus zwei gleichdimensionierten parallelgeschalteten leistungsverzweigenden Planetengetrieben 33, 34, wobei die radindividuelle Verteilung der Drehmomente stufenlos über das Drehmoment des Torque Vectoring Motors 20 einstellbar ist. Den leistungsverzweigenden Planetengetrieben 33, 34 ist eine lastausgleichende Getriebestufe 31 als aktive Stufe in Form eines Planetengetriebes nachgeschaltet, um den durch die Planetengetriebe 33, 34 geteilten Drehmomentenfluss zum Abtrieb zusammenzuführen.

In den vorgestellten Anordnungsmöglichkeiten der Figuren 1, 2 und 3 sind in einer bevorzugten Ausführungsform der Hauptantrieb 10 als ein Elektromotor ausgebildet. Ebenso ist auch ein Torque Vectoring Motor 20 ausgebildet, der aber eine schwächere Leistung als der Elektromotor des Hauptantriebs 10 aufweist. Bei einer Geradeausfahrt, bei der auf mindestens zwei Rädern (nicht dargestellt) der Achse 3 die gleichen Drehmomente anliegen, liegt der Torque Vectoring Motor 20 still. Dies bedeutet, dass bei einer Geradeausfahrt der Torque Vectoring Motor 20 nicht mitgeschleppt werden muss, was schließlich zu einer Energieersparnis führt.

Die gegenwärtige Erfindung ist in Bezug auf bevorzugte Ausführungsformen beschrieben worden. Dennoch können Änderungen und Abwandlungen der hier vorgeschlagenen Gestaltungen des Systems zur variablen Momentenverteilung durchgeführt werden, ohne dabei den Schutzbereich der nachstehenden Ansprüche zu verlassen.

### Bezugszeichenliste

- 1: System
- 3: Achse
- 10: Hauptantrieb
- 20: Torque Vectoring Motor
- 11: Getriebestufe
- 12: Hypoidgetriebe
- 13: einstufiges Stirnradgetriebe
- 14: zweistufiges Stirnradgetriebe
- 15: Synchronisationseinrichtung
- 16: Hauptantriebswelle
- 30: Differenzial
- 31: Getriebestufe
- 32: Vorlegestufe
- 33, 34: Planetengetriebe

## Patentansprüche

1. System (1) zur variablen Momentenverteilung innerhalb mindestens einer Achse (3) eines Kraftfahrzeuges *mit einem auf der Achse (3) angeordneten Differenzial* (30), mit einem Hauptantrieb (10), und mit einem Torque Vectoring Motor (20), *wobei eine Hauptantriebswelle (16)* des Hauptantriebs (10) außeraxial in Bezug auf die Achse (3) angeordnet ist und *der- Hauptantrieb (10) mit dem* Differenzial (30) über mindestens eine *dem Differenzial (30)* vorgeschalte-te Getriebestufe (11) *verbunden* ist, ***dadurch gekennzeichnet, dass** der Tor-que Vectoring Motor (20) mit einer Vorlegestufe (32) verbunden ist, so dass radindividuell die Drehmomente innerhalb der Achse (*3*) verteilbar sind, wobei die Vorlegestufe aus zwei gleichdimensionierten parallelgeschalteten leistungs-verzweigenden Planetengetrieben (33, 34) gebildet ist.*

2. System (1) nach Anspruch 1, wobei der Hauptantrieb (10) derart angeordnet ist, dass dessen Hauptantriebswelle (16) senkrecht in Bezug auf die Achse (3) verläuft und dessen Drehmoment auf das auf der Achse (3) angeordnete Differenzial (30) über die vorgeschaltete Getriebestufe (11) in Form eines Hypoidgetriebes (12) einleitbar ist.

3. System (1) nach Anspruch 1, wobei der Hauptantrieb (10) derart angeordnet ist, dass dessen Hauptantriebswelle (16) parallel in Bezug auf die Achse (3) verläuft und dessen Drehmoment auf das auf der Achse (3) angeordnete Differenzial (30) über die mindestens vorgeschaltete Getriebestufe (11) in Form eines mindestens einstufigen Stirnradgetriebes (13) einleitbar ist.

4. System (1) nach Anspruch 3, wobei mindestens eine Synchronisierungseinrichtung (15) bei dem mindestens zweistufigen Stirnradgetriebe (14) vorgesehen ist.

5. System (1) nach den Ansprüchen 1 bis 3, wobei der Hauptantrieb (10) ein Elektromotor oder ein Verbrennungsmotor ist.

6. System (1) nach Anspruch 1, wobei den leistungsverzweigenden Planetengetrieben (33, 34) eine lastausgleichende Getriebestufe (31) als aktive Stufe in Form eines Planetengetriebes nachgeschaltet ist.

7. System (1) nach den Ansprüchen 1, wobei das Differenzial (30) als Stirnraddifferenzial ausgeführt wird.

## Claims

1. System (1) for variable torque distribution within at least one axle (3) of a motor vehicle, having a differential (30) arranged on the axle (3), having a main drive (10), and having a torque vectoring motor (20), wherein a main drive shaft (16) of the main drive (10) is arranged non-axially with respect to the axle (3) and the main drive (10) is connected to the differential (30) via at least one gear stage (11) connected upstream of the differential (30), **characterized in that** the torque vectoring motor (20) is connected to a countershaft stage (32) such that the torques can be distributed within the axle (3) in a wheel-specific manner, wherein the countershaft stage is formed from two power-splitting planetary gear sets (33, 34) which are of equal dimensions and are connected in parallel.

2. System (1) according to Claim 1, wherein the main drive (10) is arranged such that its main drive shaft (16) runs perpendicular to the axle (3) and its torque can be introduced to the differential (30), which is arranged on the axle (3), via the gear stage (11) which is connected upstream and which is in the form of a hypoid gear (12).

3. System (1) according to Claim 1, wherein the main drive (10) is arranged such that its main drive shaft (16) runs parallel to the axle (3) and its torque can be introduced to the differential (30), which is arranged on the axle (3), via the gear stage (11) which is at least connected upstream and which is in the form of an at least single-stage spur gearing (13).

4. System (1) according to Claim 3, wherein at least one synchronization unit (15) is provided in the at least two-stage spur gearing (14).

5. System (1) according to Claims 1 to 3, wherein the main drive (10) is an electric motor or an internal combustion engine.

6. System (1) according to Claim 1, wherein a loadbalancing gear stage (31) as an active stage in the form of a planetary gear set is connected downstream of the power-splitting planetary gear sets (33, 34).

7. System (1) according to Claim 1, wherein the differential (30) is in the form of a spur gear differential.

## Revendications

1. Système (1) de répartition variable du couple à l'intérieur d'au moins un essieu (3) d'un véhicule automobile avec un différentiel (30) disposé sur l'essieu (3), avec un entraînement principal (10), et avec un moteur à vecteur de couple (20), un arbre d'entraînement principal (16) de l'entraînement principal (10) étant disposé de manière désaxée par rapport à l'essieu (3) et l'entraînement principal (10) étant connecté au différentiel (30) par le biais d'au moins un étage de transmission (11) monté en amont du différentiel (30), **caractérisé en ce que** le moteur à vecteur de couple (20) est connecté à un étage intermédiaire (32) de telle sorte que les couples puissent être distribués de manière individuelle pour chaque roue à l'intérieur de l'essieu (3), l'étage intermédiaire étant formé de deux engrenages planétaires (33, 34) à répartition de puissance montés en parallèle et de mêmes dimensions.

2. Système (1) selon la revendication 1, dans lequel l'entraînement principal (10) est disposé de telle sorte que son arbre d'entraînement principal (16) s'étende perpendiculairement par rapport à l'essieu (3) et que son couple puisse être introduit sur le différentiel (30) disposé sur l'essieu (3) par le biais de l'étage de transmission monté en amont (11) sous la forme d'une transmission hypoïde (12).

3. Système (1) selon la revendication 1, dans lequel l'entraînement principal (10) est disposé de telle sorte que son arbre d'entraînement principal (16) s'étende parallèlement par rapport à l'essieu (3) et que son couple puisse être introduit sur le différentiel (30) disposé sur l'essieu (3) par le biais de l'étage de transmission (11) au moins monté en amont sous la forme d'un engrenage à pignons droits à au moins un étage (13).

4. Système (1) selon la revendication 3, dans lequel au moins un dispositif de synchronisation (15) est prévu dans le cas d'un engrenage à pignons droits à au moins deux étages (14).

5. Système (1) selon les revendications 1 à 3, dans lequel l'entraînement principal (10) est un moteur électrique ou un moteur à combustion interne.

6. Système (1) selon la revendication 1, dans lequel un étage de transmission à équilibrage de la charge (31) est monté en aval des engrenages planétaires à répartition de puissance (33, 34) en tant qu'étage actif sous la forme d'un engrenage planétaire.

7. Système (1) selon la revendication 1, dans lequel le différentiel (30) est réalisé sous forme de différentiel à pignons droits.
